(19) Europäisches Patentamt
European Patent Office
Office européen des brevets

(11) **EP 1 821 317 A1**

(12) **EUROPEAN PATENT APPLICATION**
published in accordance with Art. 158(3) EPC

(43) Date of publication:
**22.08.2007 Bulletin 2007/34**

(51) Int Cl.:
*H01B 1/20* [(2006.01)]    *H01M 8/02* [(2006.01)]
*H01M 8/10* [(2006.01)]

(21) Application number: **05814322.3**

(22) Date of filing: **06.12.2005**

(86) International application number:
**PCT/JP2005/022729**

(87) International publication number:
**WO 2006/062227 (15.06.2006 Gazette 2006/24)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.12.2004 JP 2004356321**
**25.10.2005 JP 2005309228**

(71) Applicant: **JFE Chemical Corporation Tokyo 111-0051 (JP)**

(72) Inventors:
• **ARAKI, Yutaka,
IP Dept., JFE STEEL CORPORATION
Tokyo; 1000011 (JP)**
• **TAKEMURA, Kazuya,
IP Dept., JFE STEEL CORPORATION
Tokyo; 1000011 (JP)**

• **TAKAGI, Yoshinori,
IP Dept., JFE STEEL CORPORATION
Tokyo; 1000011 (JP)**
• **HATANO, Hitomi,
IP Dept., JFE STEEL CORPORATION
Tokyo; 1000011 (JP)**
• **TAKENAKA, Jouichi
c/o JFE Chemical Corporation
Taito-ku, Tokyo 1110051 (JP)**

(74) Representative: **Grünecker, Kinkeldey,
Stockmair & Schwanhäusser
Anwaltssozietät
Maximilianstrasse 58
80538 München (DE)**

(54) **SHEET MADE BY PAPERMAKING PROCESS, MULTILAYER SHEET AND SEPARATOR FOR FUEL CELL**

(57)    A sheet produced by a paper making method comprises electrically conductive fibers whose length is over 2 mm, electrically conductive powder, and resin. Since the sheet has high electrical conductivity and ex- cellent flexural property, it is suitable for use of a fuel cell separator etc.

**EP 1 821 317 A1**

**Description**

Technical Field

The present invention relates to a sheet produced by a paper making method which has excellent electrical conductivity and flexural property, a multilayered sheet using the sheet produced by the paper making method, and a fuel cell separator made by molding a plurality of such multilayered sheets.

Background Art

A polymer electrolyte fuel cell has a structure where several ten to several hundred unit cells are laminated (stacked structure). For example, each unit cell has a structure where a solid polymer film is interposed between a fuel electrode and an air electrode, and a separator is disposed outside of both electrodes. The separator has a function to prevent fuel gas (hydrogen) and air separately flowing through the front and the rear of the separator from being brought directly in contact with each other, when the unit cells are laminated. Therefore, it is necessary for the separator to have a gas barrier property with respect to the air and the fuel gas (hydrogen) flowing through the front and the rear of the separator. Moreover, since a gas flow path for leading the air or the fuel gas is formed on at least one side of the separator, from the viewpoint of prevention of gas leakage etc., high dimensional accuracy (in particular, accuracy of thickness) and smoothness of surfaces are also required. Moreover, as a matter of course, characteristics such as high conductivity, high strength, and small release of ionic impurities affecting the degradation of the polymer film are required.

As for the fuel cell separator, various types of separators have been considered as a technology that satisfies electrical conductivity and flexural property among such required characteristics.

For example, in Japanese Unexamined Patent Application Publication No. 2002-25572, a grooved separator for a polymer electrolyte fuel cell, composed of 5 to 15 wt% carbon fiber, 65 to 80 wt% graphite powder, and 15 to 30 wt% thermosetting resin is disclosed. Moreover, in Japanese Unexamined Patent Application Publication No. 2001-236966, a fuel cell separator, containing 10 to 35 parts by weight of resin and a total of 1 to 40 parts by weight of one or more of graphite powder, carbon black, and fine carbon fibers, with respect to 100 parts by weight of methocarbon microbeads, is disclosed.

However, in both technologies, the separator is formed by compression by simply mixing carbon fiber, graphite powder, and resin powder, thereby, in order to obtain a homogeneous mixture, the length of the carbon fibers has to be very small, for example, under 1 mm in the case of Japanese Unexamined Patent Application Publication No. 2002-25572 (refer to claim 6), and under 500 $\mu$m in the case of Japanese Unexamined Patent Application Publication No. 2001-236966 (refer to claim 2). However, if the length of the carbon fiber is small, there is a problem in that it is difficult to ensure the required electrical conductivity and flexural property for a fuel cell separator.

Accordingly, in order to improve the electrical conductivity and flexural property, if carbon fibers with a large length, for example, 10 mm or more, are applied to both the above technologies, the carbon fibers, graphite powder, and resin powder cannot be mixed homogeneously, rather, the electrical conductivity and flexural property are decreased. In order to homogeneously mix them, it is necessary to use a kneading machine, such as, for example, an extruding machine, however, in this case, since breakage of the carbon fibers occurs, and thereby the fiber length is reduced to 1 mm or less, it is also not sufficient to cause both of the electrical conductivity and flexural property to be compatible.

In Japanese Unexamined Patent Application Publication No. 2002-93431, a fuel cell separator, composed of expanded graphite particles, organic reinforcing fiber such as aramid (fiber length is 0.9 to 2 mm), and a sheet produced by a paper making method using resin as a binding agent, is disclosed.

However, in the technology, since the contained organic fibers for reinforcement have an insulating property, it is difficult to maintain electrical conductivity sufficient for a fuel cell separator. Further, since the fiber length of the reinforcing organic fiber is also as small as 2 mm or less, the flexural property is also difficult to improve.

Moreover, in Japanese Unexamined Patent Application Publication No. 2000-133281, a fuel cell separator, which is a sheet-like object of electrically conductive fibers (whose content is 20 to 55 wt%) bounded and solidified with synthetic resin by means of a paper making method, is disclosed.

However, in the technology, since no electrically conductive powder is added, in order to ensure electrical conductivity, it is necessary for the content of the fibers to be 20% or more, thereby, the pressing moldability of the sheet is degraded, resulting in a problem in that complex gas flow paths hardly formed when the fuel cell separator is formed.

Therefore, the object of the present invention is to provide a sheet produced by a paper making method, having excellent electrical conductivity and flexural property, a multilayered sheet using the sheet produced by the paper making method, and a fuel cell separator.

Disclosure of Invention

The present invention is a sheet produced by a paper making method, comprises electrically conductive fibers whose average length is over 2 mm, electrically conductive powder, and resin.

In addition, it is preferable for the sheet, the content of the electrically conductive fibers to be 1 to 20 mass percent, the content of the electrically conductive powder to be 50 to 96 mass percent, and the content of the resin to be 3 to 20 mass percent.

Further, it is preferable for the both sheets to be configured so that the average diameter of the electrically conductive fibers is 3 to 50 $\mu$m, and the average particle size of the electrically conductive powder is 5 to 200 $\mu$m.

Moreover, the present invention is a multilayered sheet comprises a coated layer having resin and electrically conductive powder on at least one side of the any one of the above-mentioned sheets produced by the paper making method.

In addition, it is preferable for the multilayered sheet to be configured so that the content of the resin of the coated layer is 5 to 30 mass percent, the content of the electrically conductive powder of the coated layer is 70 to 95 mass percent, the thickness of the coated layer is 0.05 to 0.5 mm, and the thickness of the sheet produced by the paper making method is 0.1 to 2 mm.

Further, the present invention is a fuel cell separator which is formed with any of above sheets produced by the paper making method and/or a multilayered sheet.

Moreover, the present invention is a sheet produced by a paper making method, comprising electrically conductive fibers whose average length is over 2 mm, electrically conductive powder, and resin.

Best Mode for Carrying Out the Invention

Hereinafter, the best mode for carrying out the invention will be described with reference to examples.

The inventors of the present invention considered that, in order to improve the electrical conductivity of a sheet containing electrically conductive fibers, electrically conductive powder, and resin, it is necessary to increase the content of the electrically conductive fibers and/or the electrically conductive powder (hereinafter, both of them are also referred to as an electrical conductor), and that, in order to improve the flexural property of the sheet, it is effective to increase the content of the electrically conductive fibers having an effect of reinforcement. However, it has been known that, if the electrically conductive fibers are contained excessively, the total flow properties of the sheet decreases, thereby, it is difficult to form a groove required when the sheet is used as a fuel cell separator.

From the viewpoint of making the sheet to be practical, it is preferable that a molded article can have a large size, and can be integrally formed until the formation of the groove required when it is used as a fuel cell separator.

Therefore, with regard to a sheet containing electrically conductive fibers, electrically conductive powder, and resin, the inventors of the present invention have been energetically investigated with respect to a method enabling to improve the electrical conductivity and flexural property, and integrated formation including until formation of a groove required when it is used as a fuel cell separator.

As a result, by causing the electrically conductive fibers, the electrically conductive powder, and the resin to have a specific shape or a specific content, respectively, we found that the electrical conductivity and flexural property can be improved, and also the molded article can be in a large size, and integral formation including until formation of a groove required when it is used as a fuel cell separator, can be realized.

In addition, the flexural property mentioned in the present invention is directed to flexural strength, flexural modulus, and flexural strain.

The present invention is performed based on the finding as mentioned above, and has the following aspects.

The sheet produced by the paper making method of the present invention, contains electrically conductive fibers whose average length is over 2 mm, electrically conductive powder, and resin.

Since the electrically conductive fibers also have an effect to bind the electrically conductive powder, and also increase the contact area between the electrical conductors, the electrical conductivity of the sheet produced by the paper making method is improved. Further, since the electrically conductive fibers also have an effect of reinforcement with respect to the resin, the flexural property the sheet produced by the paper making method are also improved, i.e. the flexural strength, the flexural modulus, and flexural strain until breakage of the sheet produced by the paper making method are increased. Meanwhile, since the contained electrically conductive powder promotes the flow properties mainly of the electrically conductive powder and the resin, workability is improved, thus, enabling to form a groove when the sheet is used as a fuel cell separator, and thinning of the sheet.

Hereinafter, the constituent elements of the sheet produced by the paper making method in the present invention, in other words, electrically conductive fibers, electrically conductive powder and resin as raw materials will be described in detail.

(A) Electrically conductive fibers

As electrically conductive fibers for the use of the present invention, a various types of metal fibers such as stainless fibers and titanium fibers, a various types of carbon fibers such as PAN-based carbon fibers, pitch-based carbon fibers, rayon-based carbon fibers, carbon nano-tubes, and carbon nano-fibers, inorganic fibers such as graphite fibers or glass fibers and mineral fibers, organic fibers such as polyester fibers and aramid fibers, on which metal is vapour-deposited or plated, or the like, can be used alone or in combination of two or more of them. In particular, from the viewpoint of corrosion resistance and high elasticity, it is preferable to use the various types of carbon fibers or the graphite fibers. Among the carbonaceous fibers, it is more preferable to use the PAN-based carbon fibers, or the pitch-based carbon fibers, which are easily available.

Moreover, as for the average fiber length of the electrically conductive fibers, from the viewpoint of ensuring the electrical conductivity and flexural property of the sheet produced by the paper making method, it is necessary to use electrically conductive fibers whose average length is over 2 mm, and from the viewpoint of ensuring a reinforcing effect, the average length is preferably to be over 2 mm and not over than 100 mm. In addition, from the viewpoint of homogeneous dispersibility and handling ability of it during a production of a web as a intermediate product as such a nonwoven fabric by the paper making process described later, it is further preferable to make the average fiber length of the electrically conductive fibers to be 3 mm to 50 mm.

Moreover, as for the average diameter of the electrically conductive fibers, it is not limited in particular, however, from the viewpoint of a reinforcing effect and ensuring the contact area between itself and the electrically conductive powder, it is preferable to be smaller than that of the electrically conductive powder, more preferably, to be under or equal to 50 μm, further preferably, to be under or equal to 30 μm, and; most preferably, to be 3 to 30 μm. If the average diameter is within the ranges, not only the number of the fibers to be used can be large, but also high fluidity is easily maintained.

The content of the electrical conductive fibers is preferably to be 1 to 20 mass percent, further preferably, to be 1 to 10 mass percent. If it is over or equal to 1 mass percent, since not only a sufficient reinforcing effect, but also a sufficient contact area between itself and the electrical conductive powder can be ensured, when they are formed into a sheet produced by a paper making method, high electrical conductivity and flexural property tend to be achieved. On the contrary, if the content is over or equal to 20 mass percent, the fluidity of the sheet produced by the paper making method tends to be obtained. Moreover, the deposition thickness of the fibers becomes suitable, thereby, after being formed into a sheet, stable strength tends to be ensured, thus resulting in high gas-impermeability when the sheet is used as a fuel cell separator.

(B) Electrically conductive powder

As electrically conductive powder for the use of the present invention, a various types of metal powder such as stainless powder and titanium powder, a various types of carbon powder such as PAN-based carbon powder, pitch-based carbon powder, and rayon-based carbon powder, inorganic powder such as graphite powder, or glass powder and mineral powder, organic powder such as polyester powder and aramid powder, on which metal is vapour-deposited or plated, or the like, can be used alone or in combination of two or more of them. In particular, from the viewpoint of ensuring corrosion resistance and high elasticity, it is preferable to use the graphite powder. In addition as the graphite powder, natural graphite, artificial graphite, the mixture thereof, or the like can be used.

Moreover, as for the shape of the electrically conductive powder, it is not limited in particular, and powder with any shape such as scaly shape, acicular shape, or, spherical shape, may be used, however, from the viewpoint of moldability, spherical shape or scaly shape is preferable.

As for the average particle size of the electrically conductive powder, it is not limited in particular, however, the average particle size (when a particle size distribution curve is measured by a particle size distribution measuring apparatus produced by Microtrak, INC) is preferably to be 5 to 200 μm. Moreover, it is more preferable to use electrically conductive powder whose average particle size is 10 to 100 μm, and it is further preferable to use electrically conductive powder whose average particle size is 20 to 80 μm. If the average particle size is within the above suitable ranges, since fluidity during molding becomes high and molding processing becomes easy, a groove to be a gas flow path when the sheet is used as a fuel cell separator is also easily formed, and, moreover, a molded article whose thinner part has a high mechanical strength can also be obtained.

As for the content of the electrically conductive powder is preferably 50 to 96 mass percent, more preferably, 75 to 96 mass percent. If the content is within the above suitable ranges, it is easy to cause the electrical conductivity and flexural property of the sheet produced by the paper making method to be compatible in a high level.

(C) Resin

The resin used for the present invention (also referred to as "matrix resin") is contained for the main purpose of ensuring gas-barrier property by binding the electrically conductive fibers and the electrically conductive powder so as to decrease the cavity of the inside of the molded article.

As for the resin, although any of thermosetting resin or thermoplastic resin can be used, from the viewpoints of flexural strength, flexural modulus, and thermal creep, the thermosetting resin is preferable.

As for the thermosetting resin, the type is not limited in particular, however, it is preferable to use resole-type phenol resin, novolac-type phenol resin, epoxy resin, epoxy-phenol resin, or mixture of one type or more of them, more preferably to use resole-type phenol resin, epoxy resin, novolac-type phenol resin, or mixture of one type or more of them, in which ion release is small, in particular.

As for the thermosetting resin, polyolefin-based resin such as polyethylene and polypropylene, polystyrene, polyvinyl chloride, polyethyleneterephthalate, polycarbonate, polyamide, polyacetal, or copolymer such as ethylene-vinyl chloride copolymer, ethylene-vinyl acetate copolymer, and styrene-butadiene-acrylonitrile copolymer, thermoplastic elastomer such as EPM and EPDM, or the like, can be used alone or in combination of two or more of them. In particular, among these, polyolefin-based resin such as polyethylene and polypropylene is used preferably, because they are excellent in strength, rigidity, and moldability. Moreover, from the viewpoints of difficulty of hydrolysis, and excellence in strength and moldability, polypropylene, polyphenylenesulfide, or the like, is used preferably. Further, from the viewpoints of excellence of balance of strength, rigidity, and moldability, and low cost, polypropylene is used more preferably.

Further, among the polypropylenes, polypropylene whose MFR (melt flow rate: measuring condition is with reference to JIS K6758, that is at 210°C and 21.2 N (2.16 kgf)) is within a range of 50 to 800 g /10 minutes is preferable from the viewpoints of strength, rigidity, and moldability, and further, a range of 100 to 600 g /10 minutes is more preferable.

Moreover, in order to improve adhesion properties of electrical conductors that are the electrically conductive fibers and the electrically conductive powder, with the thermoplastic resin, a thermoplastic resin modified with various types of compounds of acids such as unsaturated carboxylic acid or unsaturated carboxylic acid unhydride, epoxy compound, or the like, can be combined. The modification treatment can be performed by means of graft copolymerization. For example, such resin can be used, that has modified groups such as acid anhydride group and carboxyl group in molecules obtained by subjecting polypropylene to graft copolymerization with maleic acid, maleic anhydride, and acrylic acid.

As for the content of the resin, it is preferable to be 3 to 20 mass percent. If the content is not less than 3 mass percent, the bonding strength between each of the electrically conductive fibers and the electrically conductive powder is maintained sufficiently. Meanwhile, if the content of the resin is not more than 20 mass percent, the contact area between each of the electrically conductive fibers and the electrically conductive powder becomes larger, and the electrical resistance between them becomes smaller, thereby, the electrical conductivity when they are formed into a sheet is easily improved. Moreover, groove formation becomes also good.

As for the shape of the resin, a form of particles such as powder, pellet, and flake, or a form of fibers can be used. When the resin is in a form of particles, the particle size is not limited in particular, however, the average particle size is preferably to be not more than 1000 $\mu$m, more preferably to be not more than 800 $\mu$m, and further preferably to be from 5 $\mu$m to 300 $\mu$m. If the average particle size is not more than 1000 $\mu$m, since the gap between resin particles hardly becomes wider, the resin is easily to be homogeneous when it is subjected to molding processing. When the average particle size is not less than 5 $\mu$m, the resin is processed easier in the below mentioned paper making process.

Moreover, when the resin is in a form of fibers, the average fiber diameter is preferably to be not more than 50 $\mu$m, more preferably to be from 1 to 50 $\mu$m. The average fiber length is preferably to be not more than 50 mm, more preferably to be from 1 to 30 mm. When the average fiber length is not more than 50 mm, shrinkage of the resin when it is molten becomes smaller, and thereby, the sheet produced by a paper making method becomes easily homogeneous in the plane direction. When the average fiber diameter is not more than 50 $\mu$m, since the gap between the fibers hardly becomes wider, the resin becomes easily homogeneous when it is subjected to molding processing.

In addition, in order to improve the handling properties of the paper making process mentioned below, the electrically conductive powder and the resin might be granulated in advance. The average particle size of the granulated article is preferably to be not more than 2 mm, more preferably, to be not more than 1 mm, further preferably to be not more than 500 $\mu$m.

Hereinafter, the manufacturing method of the sheet produced by the paper making method, containing the above-mentioned electrically conductive fibers, electrically conductive powder and resin, will be described.

The manufacturing method of the sheet produced by the paper making method, can be divided into a paper making process and a sheet making process.

(1) Paper Making Process

First, aqueous medium containing minute air bubbles (hereinafter, referred to as "bubble liquid") is prepared under coexistence of surfactant. Next, a raw material consisted primarily of the above-mentioned electrically conductive fibers, electrically conductive powder, and resin, is dispersed in the bubble liquid. By using the bubble liquid, raw materials with different specific gravities are held between the bubbles, and can be mixed homogeneously, thus, enabling to mix electrically conductive fibers composed of long fibers. Moreover, by using the bubble liquid, it is possible to prevent the raw materials with different specific gravities from being separated during transforming the liquid.

Next, aqueous mixture (hereinafter referred to as "dispersed liquid") obtained by dispersing the raw materials in the bubble liquid is sucked and filtrated on a porous supporting body to drain, the raw materials in the dispersed liquid are deposited. By drying the deposit, an intermediate product in a state of nonwoven fabric is obtained. In addition, the intermediate product in a state of nonwoven fabric is called as a web.

In addition, it is preferable to coat and/or impregnate aqueous emulsion of thermosetting resin and/or thermoplastic resin on or into the obtained deposit before the drying process. Because, by this processing, in the subsequent drying process the resin binds the electrically conductive fibers, the electrically conductive powder, and the matrix resin, thus, resulting in improvement of the handling properties of the web.

As for the surfactant, any of anion, nonion, or cation one can be used. In particular, sodium dodecylbenzenesulfonate, coconut oil fatty acid diethanol amid, or the like is preferable, because they are excellent in homogeneous dispersion of a raw material consisted primarily of electrical fibers and resin.

In the web produced by the paper making method, raw materials are homogeneously dispersed in the width direction and in the thickness direction, and the fiber like articles are split into a state almost being a single fiber.

In addition, when the fuel cell separator is required to have hydrophily and water-repellency, the electrically conductive powder and the electrically conductive fibers may be subjected to hydrophilic processing or water-repellency processing, in advance. Moreover, hydrophily improver or water-repellency improver may be suitably added before or after the formation of paper making.

(2) Sheet Making Process

When the resin is thermoplastic resin, the web obtained by the above paper making process is heated to a temperature at which the thermoplastic resin is molten or more, subsequently, the web is pressed and compressed so as to the porosity of the web to be equal to or smaller than 70%, and the thermoplastic resin is impregnated into the electrical conductors and subsequently cooled.

Meanwhile, when the resin is thermosetting resin, the web obtained by the above paper making process (also called as a web produced by a paper making method) is heated under a condition of temperature and time where the thermosetting resin is softened but substantially hardened, subsequently, the web is pressed and compressed so as to the porosity of the web to be equal to or smaller than 70%, and the thermosetting resin is impregnated into the electrical conductors. The above-mentioned temperature at which hardening does not occur substantially, is, for example, equal to or smaller than 70°C.

When a sheet produced by a paper making method is produced by compressing the web, a plurality of webs may be compressed by superposing them, and a plurality of webs having different contents of the electrically conductive fibers, the electrically conductive powder, and the resin may also be made into a sheet by superposing them. In particular, when the flexural strength is required to be improved, the webs should be made into a sheet by laminating the webs so that webs having higher content of the electrically conductive fibers to be outside. Moreover, in order to form a deep groove, the webs should also be made into a sheet by laminating the webs so that webs having lower content of the electrically conductive fibers or webs having higher content of the resin to be outside.

In addition as a method for making webs into a sheet, known methods such as a common batch-type intermittent pressing method, a continuous pressing method using Teflon (registered mark) or a steel belt, and roll pressing method, can be applied.

The sheet produced by the paper making method of the present invention, can be obtained by means of the methods as exemplified above, and since the stage where web as an intermediate product is prepared, resembles to a conventional paper milling method, is called as a sheet produced by a paper making method. As a general technology for forming fiber-reinforced resin, methods where fibers whose length is several mm order and resin are molten and kneaded by an extruding machine or the like, subsequently, made into pellets, and the pellets are injection-molded, or the like, have been used. However, according to the methods, since strong shearing force acts upon the fibers in a kneading process of resin and fibers, or the like, when reinforcing fibers are glass fibers or carbon fibers, breakage of the fibers may easily occur. As a result, only reinforced resin by means of short fibers, can be obtained. On the contrary, by using the sheet produced by the paper making method, since very weak shearing force acts upon the fibers as compared to that of a known method, breakage of the fibers also becomes few, thus, resulting in reinforced resin by means of long fibers.

Accordingly, the "sheet produced by the paper making method" denoted in the present invention, has a feature that the length of the fibers contained in the sheet is longer than that of conventional one. The fiber length in the sheet can be determined by observing residues obtained by means of thermal decomposition under inert gas such as nitrogen using an optical microscope or the like. In general, the average fiber length in the molded body is equal to or greater than 2.0mm, and, in many cases, fibers whose length is equal to or greater than 3.0 mm, occupy in an order of 30%.

Since any of sheets produced by a paper making method of the present invention has excellent electrical conductivity and flexural property, it is possible to obtain an excellent fuel cell separator by molding these sheets. Hereinafter, the manufacturing methods of the separator will be exemplified.

When the resin of the sheet produced by the paper making method of the present invention is thermosetting resin, compression molding is performed and the thermosetting resin is hardened by charging the sheet produced by the paper making method in a mold which is heated to a temperature at which the thermosetting resin is hardened, and clamping the mold. In particular, hardening should be performed after flowing the sheet by temporarily stopping mold clamping until final thickness is reached, heating the sheet under a condition where the thermosetting resin is not hardened, subsequently, increasing the applied pressure further, clamping the mold until the target thickness.

Meanwhile, when the resin of the sheet produced by the paper making method of the present invention is thermoplastic resin, compression molding is performed by heating the sheet produced by the paper making method produced in the above-mentioned method to a temperature equal to or greater than the temperature at which the thermoplastic resin is molten and under the temperature at which the thermoplastic resin is thermally decomposed, and charging it in a mold. The temperature of the mold for performing compression molding or for cooling and solidifying the sheet, may be equal to or smaller than the congealing point of the thermoplastic resin, and, from the viewpoint of ensuring flow properties, it is desirable to use a temperature as high as possible.

Here, in the above two cases, it is preferable for the sheet produced by the paper making method to be charged in the mold, to have such a size that 50% or more, more preferably 80% or more, further preferably 90% or more, of the plane whose projected area is largest in the mold, is covered. If the size of the sheet produced by the paper making method to be charged in the mold is small, when the sheet is subjected to compression molding, a weld which is made by connection of parts where the sheet is flowed, becomes large, thus, resulting in degradation of flexural property.

Moreover, molding may be performed by superposing a plurality of sheets having different sizes with being fitted to the depth and shape of the groove, and may be performed by superposing a plurality of sheets having different contents of electrically conductive substances in accordance with purposes.

Since the sheet produced by the paper making method of the present invention has excellent electrical conductivity and flexural property, although the sheet can be used for applications, for example, such as various types of electrically conductive sheets and radiator sheets, the sheet is most suitable for a fuel cell separator to which in addition to electrical conductivity and flexural property, moldability is also required.

Further, in this application, an invention of a multilayered sheet using any one of the above-mentioned sheets produced by the paper making method is used, and comprising a coated layer having resin and electrically conductive powder at least on one surface of the sheet produced by the paper making method, is also provided.

When the coated layer is provided to the sheet produced by the paper making method, a multilayered sheet which is excellent not only in the flexural property but also in surface smoothness, can be obtained. The sheet produced by the paper making method of the present invention, has surface smoothness of an order available to a common separator even by itself. However, for application to which more strict surface smoothness is S required, the multilayered sheet can be used. In addition, even when surface roughness of the sheet produced by the paper making method occurs due to too much content of the carbon fibers, the problem can be addressed by making the sheets produced by the paper making method into a multilayered sheet. Consequently, in this application, a fuel cell separator using the multilayered sheet is also provided.

In addition, as the resin and the electrically conductive powder constituting the coated layer, the resin (C) and the electrically conductive powder (B) for the above-mentioned sheet produced by the paper making method, can be used preferably.

Further, as the multilayered sheet of the present invention, a multilayered sheet where the sheet produced by the paper making method has a thickness of 0.1 to 2 mm, and the coated layer has a thickness of 0.05 to 0.5 mm, and contains 5 to 30 mass percent of the resin and 70 to 95 mass percent of the electrically conductive powder, is preferable.

If the resin content of the coated layer is within the range, the electrical conductivity and the moldability of the multilayered sheet become excellent. The content of the resin is, more preferably, 5 to 20 mass percent, and further preferably, 5 to 15 mass percent.

Moreover, the composition ratio of the electrically conductive powder of the coated layer is not also limited in particular, however, in the above-mentioned range, the groove is formed more easily during compression molding, and higher electrical conductivity can be obtained. The composition ratio of the electrically conductive powder is preferably 70 to 95 mass percent, more preferably, 80 to 95 mass percent, and further preferably, 85 to 95 mass percent.

Since any of the multilayered sheets of the present invention is not only excellent in the electrical conductivity and flexural property, but also excellent in surface smoothness, it is possible to obtain an excellent fuel cell separator by molding them. Hereinafter, the manufacturing methods of the multilayered sheet and the separator will be exemplified.

Using an example when the multilayered sheet of the present invention has a three layered structure where the surface and the rear-surface of the sheet produced by the paper making method are interposed between two coated layer, the manufacturing of the multilayered sheet of the present invention will be described. In addition, a web to be the coated layer (also called as a coated web) can also be produced according to the paper making process. First, a sheet of coated web is produced. The coated web can be produced, for example, by filtering and separating fluid dispersion containing resin and electrically conductive powder under a vacuum on a filter of the paper making device. Next, the fluid dispersion containing resin and electrically conductive powder is gently flowed on the coated web, and filtered. By this operation, a web with a two layer structure formed with a lower layer composed of resin and electrically conductive powder, and an upper layer composed of resin, electrically conductive powder, and electrically conductive fibers, is produced. Finally, the fluid dispersion containing resin and electrically conductive powder is flowed on the web with a two layer structure, and filtered. By performing the above operation, a web with a three layer structure can be produced. In addition, the fluid dispersion is preferably bubble liquid obtained by stirring water and surfactant. The reason is because it can homogeneously mix resin, electrically conductive powder, and electrically conductive fibers, having different specific gravities and shapes. By compression molding or hot compression molding the web with a thee layer structure, a three layer sheet of the present invention can be produced. In addition, if the laminated wed is molded into a shape suitable for a separator of a fuel cell in the pressure molding process, a fuel cell separator can be obtained.

Moreover, a two layer web with a coated layer only the one surface thereof is obtained by laminating the coated web only on the one surface of the web produced by the paper making method. The multilayered sheet and the fuel cell separator of the present invention, can also be produced by laminating the two sheets of the webs so that the web surfaces produced by the paper making method, containing fibers are superposed, and subjecting them to pressure molding under a hot temperature. In addition, in the present invention, an article that is produced by directly subjecting the above-mentioned two layer web to pressure molding under a hot temperature, can also be used as the sheet produced by the paper making method and the fuel cell separator of the present invention. Moreover, the above-mentioned multilayered sheet can also be produced by producing a sheet produced by a paper making method, and a coated layer, separately, and subjecting a lamination sheet made by laminating them to pressure molding under a hot temperature. Alternatively, a lamination article combined with a sheet produced by a paper making method, and a coated web, can also be subjected to pressure molding under a hot temperature.

Moreover, in the above-mentioned paper making process, resin and electrically conductive powder which are raw materials of the coated layer and granulated in advance, further, resin and electrically conductive powder which are pulverized and classified into suitable sizes of granulation of the pre-granulated resin and electrically conductive powder, or the like, can also be used. It is preferable to use the granulated articles whose average particle size is not more than 2 mm, more preferably not more than 1 mm, and further preferably not more than 500 $\mu$m. It is preferable to make the particle size of the raw materials not smaller than that of the resin and the electrically conductive powder by subjecting the raw materials to such granulation and classification, because, in a filtering process when making a paper, clogging of the filtration filter due to the resin and the electrically conductive powder becomes few.

When a multilayered sheet or a fuel cell separator is produced by subjecting the lamination sheet to pressure molding under a hot temperature, in general, it is preferable to use the molding conditions and the molding method indicated below.

When thermosetting resin is used as the resin, it is preferable for the mold temperature to be within a range of 50 to 300°C, preferably 80 to 250°C, further preferably 100 to 200°C, and for the pressing time to be within a range of 10 seconds to 20 minutes. Moreover, it is also possible to demold the sheet from the mold in a state where the resin is not hardened perfectly in the mold, subsequently, to advance the hardening reaction perfectly by subjecting a plurality of sheets to heat treatment, simultaneously, using a heating furnace etc. It is preferable to use the method because of improvement of productivity.

Next, when thermoplastic resin is used, a method where pressure molding is performed by pre-heating a lamination sheet to a temperature being equal to or greater than the softening point of the resin, and immediately after, by charging the heated reserve sheet into the mold whose temperature is set to a temperature equal to or smaller than the softening point of the resin, or the like, is preferably used.

The molding pressure when a multilayered sheet and a fuel cell separator of the present invention is obtained, is not limited in particular, however, in general, it is 0.98 to 981 MPa (10 kgf/cm$^2$ to 10 tonf/cm$^2$), preferably 9.8 to 98 MPa (100 kgf/cm$^2$ to 1 tonf/cm$^2$), per unit area of the molded article. If it is equal to or greater than 0.98 MPa, since the packing density of the molded article becomes sufficiently high, electrical conductivity is high, and the transfer property of a groove is also excellent. Meanwhile, it is more preferable for the molding pressure to be equal to or smaller than 981 MPa, because deformation of the mold hardly occurs.

In the multilayered sheet and the fuel cell separator of the present invention, when they have a three layer structure, the thicknesses of a lower layer, an intermediate layer (sheet produced by a paper making method), and an upper layer, are not limited, in particular, it is preferable that the thickness of the lower layer is within a range of 0.05 to 1 mm, that of the intermediate layer is within a range of 0.1 to 2 mm, and that of the upper layer is within a range of 0.05 to 1 mm. When the thicknesses of the lower and upper layer are equal to or greater than 0.05 mm, since the electrically conductive fibers contained in the intermediate layer are hardly exposed, excellent surface smoothness can be maintained. Meanwhile, when the thicknesses of the lower and upper layer are equal to or smaller than 1 mm, the strength of the multilayered sheet can be easily maintained. It is more preferable for the thickness of the lower layer or the upper layer to be 0.05 to 0.5 mm. Moreover, when the thickness of the sheet produced by the paper making method, that is the intermediate layer, is equal or greater than 0.1 mm, the strength is high. Meanwhile, the thickness of the intermediate layer is preferably equal to or smaller than 2.0 mm, because the electric conductivity of the multilayered sheet or the fuel cell separator becomes advantageous.

In addition, it is possible to add various types of additives to the multilayered sheet and the fuel, cell separator of the present invention, in a range where their performances do not degrade. As such additives, various types of fibers can be included. For example, synthetic fibers such as polyester fibers and aramid fibers, natural fibers such as bamboo fibers and kenaf fibers, and inorganic fibers such as potassium titanate whiskers, are preferable. The strength of the multilayered sheet or the fuel cell separator of the present invention is increased by adding such fibers.

Moreover, inorganic compounds can also be used as the additives. As the inorganic compounds, silica, titania, magnesia, talc, calcium carbonate, mica, or the like, are suitable. In some cases, by adding such an inorganic compound, moldability increases. Moreover, it is also possible to add an internal lubricant such as carnauba wax, zinc stearate, and calcium stearate. By adding such an internal lubricant, demoldability will be improved.

Example

Compounding ratio of the electrical conductive fibers, the electrical conductive powder, and the resin which are used for production of each sheet produced by the paper making method, is given in Table 1. Moreover, by cutting the obtained sheets (square of 300 mm on a side) produced by the paper making method into squares of 200 mm on a side, and molding them into a fuel cell separator of 200 mm-square, volume specific resistance, flexural strength, flexural modulus, and flexural strain are measured. The results are given in Table 1 together.

Hereinafter, a manufacturing method of sheets produced by the paper making method, and a method for molding them into a fuel cell separator, will be described in detail.

A. Manufacturing method of sheets produced by paper making method

A-1. A paper making process

A-1: Examples 1 to 4, Comparative example 2

Bubble liquid containing minute bubbles was prepared by adding sodium dodecylbenzenesulfonate, that is a surfactant, into 3 liters of water so as to be a concentration of 0.5 g/l, and stirring the water. Fluid dispersion was made by charging electrically conductive fibers, electrically conductive powder, and resin whose dry weights are given in Table 1, into the water, and stirring the water for 10 minutes so as to be a well-dispersed solution. Next, a 400 g/m$^2$ (basis weight in a dry state) of web was produced by filtering the fluid dispersion using a paper-making machine.

A-2. A sheet making process

A-2-1: Examples 1 and 2

A web was dried at a temperature of 80°C, interposed between pressing disks whose temperature is 120°C, and compressed until its porosity became 30% to form a sheet.

A-2-2: Examples 3 and 4, Comparative example 2

A web was dried at a temperature of 180°C, interposed between pressing disks whose temperature is 200°C, and compressed until its porosity became 30% to form a sheet.

A-2-3: Comparative example 1

Electrically conductive fibers, electrically conductive powder, and resin were pre-mixed using a mixer, and subsequently, using an injection compression molding machine (produced by MEIKI CO., LTD; conditions: mold clamping force: 1.47 x 10^6 N (150 tf), cylinder temperature: 120°C, mold temperature: 80°C, and mold clamping time: 30 sec), the mixture was formed into a plate (thickness: 2.2 mm; long side: 17 cm; short side: 10.5 cm) whose surface was substantially smooth.

A-2-4: Comparative example 3

Electrically conductive fibers, electrically conductive powder, and resin were pre-mixed using a mixer, and subsequently, using an extruding machine, a homogeneous mixture was obtained by kneading the mixture (the average length of the carbon fibers of the mixture was 0.15 mm). Using an injection compression molding machine (produced by MEIKI CO., LTD; conditions: mold clamping force: 1.47 x 10^6 N (150 tf), cylinder temperature: 120°C, mold temperature: 80°C, and mold clamping time: 30 sec), the mixture was formed into a plate (thickness: 2.2 mm; long side: 17 cm; short side: 10.5 cm) whose surface was substantially smooth.

B. Molding method to a fuel cell separator

B-1: Examples 1 and 2

A sheet produced by a paper making method (190 mm x 190 mm) was placed on a plate mold (200 mm x 200 mm) whose temperature was set to 200°C, then the mold was clamped under a surface pressure of 98 MPa (target thickness: 2 mm), and the resin of the sheet was hardened for 10 minutes. Test pieces were cut out from the molded article, and were subjected flexural tests; the volume resistance of the test pieces was measured.

B-2: Examples 3 and 4, Comparative examples 2 and 3

A sheet produced by a paper making method (190 mm × 190 mm) was placed on a plate mold (200 mm x 200 mm) whose temperature was set to 200°C, then the mold was clamped under a surface pressure of 98 MPa (target thickness: 2 mm), and the resin of the sheet was cooled for 2 minutes. Test pieces were cut out from the molded article, and were subjected to flexural tests; the volume resistance of the test pieces was measured.

B-3: Comparative example 1

A cut-out plate (90 mm x 90 mm) was placed on a plate mold (100 mm x 100 mm) whose temperature was set to 200°C, then the mold was clamped under a surface pressure of 98 MPa (target thickness: 2 mm), the plate was hardened for 10 minutes, and a molded article was formed. Test pieces were cut out from the molded article, and were subjected to flexural tests; the volume resistance of the test pieces was measured.
Moreover, a flexural test method for measuring flexural strength, flexural modulus and flexural strain, and a method for measuring volume specific resistance, will be described below.

[Method of Flexural Test]

Samples were cut out from a smooth portion of the molded article, and subjected to the flexural tests by means of a method according to JIS K 7074-1988, using Autograph produced by Simadzu Corp.

[Method for Measuring Volume Specific Resistance]

A 5 cm x 5 cm sample was cut out from a smooth portion of the molded article, and subsequently, by sandwiching it between Au-plated electrodes via carbon sheets, and subjected to pressure of 40 MPa (408 kgf/cm^2); the passing through resistance in a volume direction was measured, thus, volume specific resistance given by formula (1) was measured.

```
Volume specific resistance (mΩcm) = resistance (mΩ) × area

(cm^2)/thickness (cm)  (1)
```

Molded articles of examples 1 to 4, and comparative examples 2 and 3 were calcined at a temperature of 600°C, and the length of the carbon fibers of the calcined articles were observed. The average lengths of the carbon fibers of examples 1 to 4, and comparative examples 2 were same as that of the raw material, and the average lengths of the carbon fibers of comparative examples 3 was 0.15 mm.

When compared examples 1 to 2 with comparative example 1 each of where thermosetting resin is used, it is clear that the flexural properties and the volume specific resistances of examples 1 to 2 where carbon fibers whose average length is large are mixed, are better than those of comparative example 1. When compared examples 3 to 4 with comparative examples 2 to 3 each of where thermoplastic resin is used, it is clear that flexural properties and volume specific resistances of examples 1 to 2 where carbon fibers whose average length is large and natural graphite are mixed, are better than those of comparative examples 2 to 3. In particular, it is understood that in examples where carbon fibers whose average length is large and natural graphite are mixed, flexural strength, flexural modulus, and flexural strain are improves in a balanced manner. Accordingly, it is understood that when the sheet produced by the paper making method is used, the flexural property, in particular, the flexural strain can be improved largely, and handling ability when the size of the separator becomes large, is excellent.

C: Manufacturing Method of Multilayered Sheet

Example 5

100 g resole-type phenol resin (produced by GUN EI CHEMICAL INDUSTRY CO., LTD; HKG) was dissolved in 200 g acetone, and 900 g natural graphite (spherical shape; average particle size: 60 $\mu$m) was mixed with the solution homogeneously, subsequently, the mixture was dried under a reduced pressure at a temperature of 50°C for twelve hours. The obtained mixture was granulated using Roller Compactor (produced by TURBO KOGYO CO., LTD), subsequently, the mixture was classified, and a mixture whose average particle size was 0.1 mm to 1 mm, was obtained. Next, 5 g dodecylbenzenesulfonate and 1.5 littlers water was charged into a 5 litters container, and they were stirred for ten minutes. 100 g granulated articles of the graphite and resin was added into bubble liquid in a state where sufficient bubble liquid was generated, and stirred for ten minutes. After stirring was finished, they were poured into a 30 cm square paper making device with a filtration filter, and were subjected to vacuum filtration, and a coated web was produced by filtering and separating the fluid dispersion.

Next in a 5 litters container, the same bubble liquid as above was prepared, and subsequently, a liquid mixture for a paper making web was prepared by adding 100 g the granulated articles of the graphite and resin and 3 g PAN-based carbon fibers (produced by TOHO TENAX CO., LTD; fiber radius: 7 $\mu$m; fiber length: 13 mm) into the bubble liquid, and stirring them for ten minutes. The liquid mixture was poured on the coated web, and a two layer lamination web was produced by subjecting it to vacuum filtration and filtering and separating the fluid liquid. Further, a three layer web where a sheet of paper making web was interposed between two pieces of coated webs, was produced by laminating a coated web again on the two layer lamination web according to the manufacturing method of the coated web.

The surface of the obtained three layer web was misted with water to clean out the surfactant, and subsequently, the cleaning water was removed by means of vacuum filtration. This cleaning operation was repeated three times, finally, the three layer web was took out from the paper making device, and dried for 24 hours in a vacuum drier whose temperature was 50°C.

The three layer web was charged in a hot press, and it was pre-molded by being pressed while the resin was molten at a temperature of 120°C. A multilayered sheet were obtained by cutting the pre-molded sheet into an order of A4 size while fitting the pre-molded sheet to a cavity of the mold for a separator. The multilayered sheet was charged into the cavity of the mold for a separator, where gas flow paths could be formed on the both surfaces, and subjected to press molding for 10 minutes at a temperature of 200°C to form a fuel cell separator. The strength (flexural strength) and the electrical conductivity (volume specific resistance) of the obtained fuel cell separator were measured, and the results and the result of observation of surface property were given in Table 2 together.

Example 6

In above-mentioned Example 5, using 7 g polypropylene powder (obtained by subjecting commercially available polypropylene pellets to freeze pulverization, classifying the pulverized pellets and being prepared so as to be powder whose average particle size is 0.1 mm to 0.5 mm) as resin, and 93 g natural graphite (spherical shape; average particle size: 60 $\mu$m), a three layer structure lamination web was obtained by means of the same method as that of Example 5. The three layer structure lamination was dried in a vacuum, and subsequently made into a pre-molded sheet using a hot press being heated to a temperature of 180°C. The pre-molded sheet was cut into an order of A4 size so as to suit the size of the mold, subsequently, heated in an oven heated to a temperature of 220°C for 10 minutes, the softened sheet was took out from the oven, and subjected to a pressure molding by being inserted into the mold for molding a separator, whose temperature was 90°C, immediately. The strength (flexural strength) and the electrical conductivity (volume specific resistance) of the obtained fuel cell separator were measured, and the results and the result of observation of surface property were given in Table 2 together.

Example 7

A lamination web with a two layer structure composed of a paper making web and a coated web was produced by means of the method of Example 5. Using two sheets of the two layer webs, a four layer web was prepared by laminating four layers so that two paper making webs were superposed each other. A pre-molded sheet was made by pressing the four layer web using a hot press being heated to a temperature of 120°C. The pre-molded sheet was cut into an order of A4 size so as to suit the size of the cavity of the mold. The cut pre-molded sheet was charged into the cavity of a separator mold where gas flow path could be formed on the both surfaces, and a fuel cell separator was molded by subjecting the pre-molded sheet to pressing molding at a temperature of 200°C for 10 minutes. The strength (flexural strength) and the electrical conductivity (volume specific resistance) of the obtained fuel cell separator were measured, and the results and the result of observation of surface property were given in Table 2 together.

Example 8

A fuel cell separator was molded by means of the same method as that of Example 5, except for using a mixture of 34 mass percent of resole-type phenol resin (produced by GUN EI CHEMICAL INDUSTRY CO., LTD; HKG), 65 percent of epoxy resin (produced by NIPPON KAYAKU CO., LTD; EOCN), and 1 weight percent of 2-phenylimidazole. The strength (flexural strength) and the electrical conductivity (volume specific resistance) of the obtained fuel cell separator were measured, and the results and the result of observation of surface property were given in Table 2 together.

Comparative Example 4

Electrically conductive fibers, electrically conductive powder = and resin were pre-mixed using a mixer, and subsequently, using an injection compression molding machine (produced by MEIKI CO., LTD; conditions: mold clamping force: $1.47 \times 10^6$ N (150 tf), cylinder temperature: 120°C, mold temperature: 80°C, and mold clamping time: 30 sec), the mixture was formed into a plate (thickness: 2.2 mm; long side: 17 cm; short side: 10.5 cm) whose surface was substantially smooth.
The plate cut out into a piece of 90 mm x 90 mm was placed on a plate mold (100 mm $\times$ 100 mm) whose temperature was set to a temperature of 200°C, then the mold was clamped under a surface pressure of 98 MPa (target thickness: 2 mm), and a fuel cell separator was molded by hardening the resin of the sheet for 10 minutes. Test pieces were cut out from the molded article, and were subjected to flexural tests; the volume resistance of the test pieces was measured. The strength (flexural strength) and the electrical conductivity (volume specific resistance) of the obtained fuel cell separator were measured, and the results and the result of observation of surface property were given in Table 2 together.

Comparative Example 5

Bubble liquid containing minute bubbles was prepared by adding sodium dodecylbenzenesulfonate, that was a surfactant, into 3 liters water so as to be a concentration of 0.5 g/l, and stirring the water. Fluid dispersion was made by charging 90 mass percent electrically conductive fibers, and 10 mass percent resin, respectively represented by dry weight, into the bubble liquid, and stirring the mixture for 10 minutes so as to be a well-dispersed solution. Next, a 4000 $g/m^2$ (basis weight in a dry state) web was produced by filtering the fluid dispersion using a paper making machine.
A sheet produced by a paper making method was made by drying the web at a temperature of 180°C, interposed between pressing disks whose temperature is 200°C, and compressed until its porosity became 30%.
The sheet produced by the paper making method (190 mm x 190 mm) heated to a temperature of 200°C by a far-infrared furnace, was placed on a plate mold (200 mm x 200 mm) whose temperature was set to 100°C, then a fuel cell separator was molded by clamping the mold under a surface pressure of 98 MPa (target thickness: 2 mm), and subsequently cooling the molded article for 2 minuts. The strength (flexural strength) and the electrical conductivity (volume specific resistance) of the obtained fuel cell separator were measured, and the results and the result of observation of surface property were given in Table 2 together.

Comparative Example 6

Electrically conductive fibers, electrically conductive powder, and resin were pre-mixed using a mixer, and subsequently, a homogeneous mixture was obtained by using an extruding machine (the average length of the carbon fibers of the mixture was 0.15 mm). Using an injection compression molding machine (produced by Meiki Seisakusyo; conditions: mold clamping force: 1.47 x $10^6$ N (150 tf), cylinder temperature: 120°C, mold temperature: 80°C, and mold clamping time: 30 sec), the mixture was molded into a plate (thickness: 2.2 mm; long side: 17 cm; short side: 10.5 cm) whose surface was substantially smooth.

The sheet produced by the paper making method (190 mm x 190 mm) heated to a temperature of 200°C by a far-infrared furnace, was placed on a plate mold (200 mm x 200 mm) whose temperature was set to 100°C, then a fuel cell separator was molded by clamping the mold under a surface pressure of 98 MPa (target thickness: 2 mm), and subsequently cooling the molded article for 2 minuts. The strength (flexural strength) and the electrical conductivity (volume specific resistance) of the obtained fuel cell separator were measured, and the results and the result of observation of surface property were given in Table 2 together.

Reference Example

A web produced by a paper making method composed of graphite, carbon fibers, and resin was produced by means of the method of Example 5. Using a mold for molding a separator, similar to Example 5, a fuel cell separator was molded. The strength (flexural strength) and the electrical conductivity (volume specific resistance) of the obtained fuel cell separator were measured, and the results and the result of observation of surface property were given in Table 2 together.

In addition, flexural strength and surface property were measured as follow:

[Flexural strength]

The plate portion of a molded article was cut into 5 cm (length) x 1 cm (width) pieces, and subsequently, using Autograph produced by SHIMAZU CORPORATION, and according to JIS K-6911, three-points flexural strength was measured at a distance between spans of 4.5 cm.

[Surface property]

By observing the surface of the molded article by means of viewing, a case where exposure of carbon fibers could be hardly seen, was defined as "good".

As is clear from the results in Table 2 described-above, it was understood that fuel cell separators of Examples 5 to 8, were excellent in any one of properties of strength, electrical conductivity, and surface property. On the contrary, in single layer structure fuel cell separators composed of only a layer containing graphite, resin and carbon fibers (reference example), their surface property was poor, and in single layer structure fuel cell separators composed a layer only containing graphite and resin only (comparative example 4), the strength was poor, and the electrical conductivity was also rather poor.

Moreover, in fuel cell separators composed of carbon fibers and resin only (comparative example 5), the strength and the electrical conductivity were poorer than those of comparative example 4, and the surface property was also poor.

In fuel cell separators molded by means of injection molding (comparative example 6), the surface property was poor, and the electrical conductivity was rather poor.

Table 1

| No. | Raw material | | | | | | Production method of a sheet produced by paper making method | | Molding method | Properties | | | |
|---|---|---|---|---|---|---|---|---|---|---|---|---|---|
| | Electrically conductive fibers | | Electrically conductive Electrically conductive powder | | Paper Resin making process | | | Sheet making process | | Flexural strength (Mpa) | Flexural modulus (Gpa) | Flexural strain (%) | Volume specific resistance (mΩcm) |
| Example 1 | PAN-based carbon fibers PAN-based carbon fibers Average diameter 7μm x Average fiberlength 13mm (Produced by TOHO TENAX) | 3wt % | Natural graphite 87wt (Average particle size 60μm) | 87 wt % | Resole-type phenol resin Resole-type phenol resin (Produced by GUN EI CHEMICAL INDUSTRY HKG) | 10wt % | A-1 | A-2-1 | B-1 | 71 | 20 | 0.80 | 8 |

(continued)

| No. | Raw material | | | | | | Production method of a sheet produced by paper making method | | Molding method | Properties | | | |
|---|---|---|---|---|---|---|---|---|---|---|---|---|---|
| | Electrically conductive fibers | | Electrically conductive Electrically conductive powder | | Paper Resin making process | | | Sheet making process | | Flexural strength (Mpa) | Flexural modulus (Gpa) | Flexural strain (%) | Volume specific resistance (mΩcm) |
| Example 2 | PAN-based carbon fibers Average diameter 7$\mu$m x Average fiber length 13mm (Produced by TOHO TENAX) | 5wt % | Natural graphite (Average particle size 60$\mu$m) | 80wt % | Resole-type phenol resin (Produced by GUN EI CHEMICAL INDUSTRY HKG) | 15wt % | A-1 | A-2-1 | B-1 | 90 | 26 | 1.0 | 15 |

| No. | Raw material | | | | | | Production method of a sheet produced by paper making method | | Molding method | Properties | | | |
|---|---|---|---|---|---|---|---|---|---|---|---|---|---|
| | Electrically conductive fibers | | Electrically conductive Electrically conductive powder | | Paper Resin making process | | | Sheet making process | | Flexural strength (Mpa) | Flexural modulus (Gpa) | Flexural strain (%) | Volume specific resistance (mΩcm) |
| Example 3 | PAN-based carbon fibers Average diameter 7μm Average diameter 7μm × 7μm Average fiber length 5mm (Produced by TOHO TENAX) | 10wt % | Natural graphite (Average particle size 60μm) | 75wt % | Polypropylene powder (MI=120) (Produced by SUMITOMO % CHEMICAL) | 15wt | A-1 | A-2-2 | B-2 | 50 | 8 | 1.37 | 50 |

| No. | Raw material | | | | | | Production method of a sheet produced by paper making method | | Molding method | Properties | | | |
|---|---|---|---|---|---|---|---|---|---|---|---|---|---|
| | Electrically conductive fibers | | Electrically conductive Electrically conductive powder | | Paper Resin making process | | | Sheet making process | | Flexural strength (Mpa) | Flexural modulus (Gpa) | Flexural strain (%) | Volume specific resistance (mΩcm) |
| Example 4 | PAN-based carbon fibers Average diameter 7μm x Average fiber length 13mm (Produced by TOHO TENAX) | 3wt % | Natural graphite (Average particle size 60μm) | 87wt % | Polypropylene fibers (2.2dtex x 5mm) (Produced by CHISSO) | 10wt % | A-1 | A-2-2 | B-2 | 39 | 9 | 1.88 | 35 |
| Comparative example 1 | None | 0 | Natural graphite (Average article size 60μm) | 85wt % | Resole-type phenol resin (Produced by GUN EI (Produced by GUN EI CHEMICAL INDUSTRY HKG) | 15wt % | None | A-2-3 | B-3 | 41 | 17 | 0.25 | 18 |

EP 1 821 317 A1

(continued)

| No. | Raw material | | | | | | Production method of a sheet produced by paper making method | | Molding method | Properties | | | |
|---|---|---|---|---|---|---|---|---|---|---|---|---|---|
| | Electrically conductive fibers | | Electrically conductive Electrically conductive powder | | Paper Resin making process | | | Sheet making process | | Flexural strength (Mpa) | Flexural modulus (Gpa) | Flexural strain (%) | Volume specific resistance (mΩcm) |
| Comparative example 2 | PAN-based carbon fibers Average diameter 7μm Average fiber × length 5mm (Produced by TOHO TENAX) | 90wt% | None | 0 | Polypropylene powder (MI=120) (Produced by SUMITOMO CHEMICAL) | 10wt% | A-1 | A-2-2 | B-2 | 1 | 0.6 | 1.5 | 150 |
| Comparative example 3 | PAN-based carbon fibers Average diameter 7μm × Average fiberlength 5mm (Produced by TOHO TENAX) | 10wt% | Natural graphite (Average particle size 60μm) | 75wt% | Polypropylene powder (MI=120) (Produced by SUMITOMO CHEMICAL) | 15wt% | None | A-2-4 | B-2 | 20 | 2 | 0.5 | 50 |

Table 2

| No. | Layer structure of a multilayered sheet (fuel cell separator) | | | | | | | | | | Properties | | |
| | Lower coated layer | | | Intermediate sheet produced by paper making method | | | | Upper coated layer | | | | | |
| | Resin content (mass percentage) | Electrically conductive powder content (mass percentage) | Thickness (mm) | Resin content (mass percentage) | Electrically conductive powder content (mass percentage) | Electrically conductive fibers content (mass percentage) | Thickness (mm) | Resin content (mass percentage) | Electrically conductive powder content (mass percentage) | Thickness (mm) | Flexural strength (Mpa) | Volume specific resistance (mΩcm) | Surface smoothness property |
|---|---|---|---|---|---|---|---|---|---|---|---|---|---|
| Example 5 | 10 | 90 | 0.7 | 9.7 | 87.4 | 2.9 | 0.7 | 10 | 90 | 0.7 | 85 | 9 | Good |
| Example 6 | 7 | 93 | 0.7 | 6.8 | 90.3 | 2.9 | 0.7 | 7 | 93 | 0.7 | 80 | 10 | Good |
| Example 7 | 10 | 90 | 0.7 | 9.7 | 87.4 | 2.9 | 1.4 | 10 | 90 | 0.7 | 88 | 9 | Good |
| Example 8 | 10 | 90 | 0.7 | 9.7 | 87.4 | 2.9 | 0.7 | 10 | 90 | 0.7 | 90 | 10 | Good |
| Comparative example 4 | None | | | 15 | 85 | 0 | 2.1 | None | | | 41 | 18 | Good |
| Comparative example 5 | None | | | 10 | 0 | 90 | 2.0 | None | | | 1 | 150 | Carbon fibers are exposed |
| Comparative example 6 | None | | | 15 | 75 | 10 | 2.2 | None | | | 20 | 20 | Carbon fibers are exposed |
| Reference example | None | | | 9.7 | 87.4 | 2.9 | 2.1 | None | | | 71 | 8 | Carbon fibers are exposed |

EP 1 821 317 A1

Industrial Applicability

According to the present invention, the sheet produced by the paper making method having high electrical conductivity and excellent flexural property can be obtained. Further, multilayered sheets of the present invention comprising a coated layer on at least one surface of said sheet produced by the paper making method, have not only high electrical conductivity and excellent flexural property, but also have a beautiful surface smoothness. Therefore, these sheets are suitable for the use of a fuel cell separator, thus, enabling to contribute to miniaturization and performance improvement of the fuel cell.

**Claims**

1. A sheet produced by a paper making method comprising:

   electrically conductive fibers whose average length is over 2 mm;
   electrically conductive powder; and
   resin.

2. The sheet according to claim 1, wherein the content of the electrically conductive fibers is in the range of 1 to 20 mass percent, the content of the electrically conductive powder is in the range of 50 to 96 mass percent, and the content of the resin is in the range of 3 to 20 mass percent.

3. The sheet according to claim 1, wherein the average diameter of the electrically conductive fibers is in the range of 3 to 50 $\mu$m, and the average particle size of the electrically conductive powder is in the range of 5 to 200 $\mu$m.

4. A fuel cell separator, which is produced by molding the sheet according to any one of claims 1 to 3.

5. A multilayered sheet comprising:

   a coated layer having resin and electrically conductive powder on at least one surface of the sheet according to claim 1.

6. The multilayered sheet according to claim 5, wherein the content of the resin of the coated layer is in the range of 5 to 30 mass percent, the content of the electrically conductive powder of the coated layer is in the range of 70 to 95 mass percent, the thickness of the coated layer is in the range of 0.05 to 0.5 mm, and the thickness of the sheet produced by the paper making method is in the range of 0.1 to 2 mm.

7. A fuel cell separator, which is produced by molding the multilayered sheet according to claim 5 or claim 6.

8. A sheet produced by a paper making method, comprising electrically conductive fibers whose average length is over 2 mm, electrically conductive powder, and resin.

## INTERNATIONAL SEARCH REPORT

| | International application No. |
|---|---|
| | PCT/JP2005/022729 |

A. CLASSIFICATION OF SUBJECT MATTER
*H01B1/20*(2006.01), *H01M8/02*(2006.01), *H01M8/10*(2006.01)

According to International Patent Classification (IPC) or to both national classification and IPC

B. FIELDS SEARCHED

Minimum documentation searched (classification system followed by classification symbols)
H01B1/20, H01M8/02, H01M8/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-269567 A (Osaka Gas Co., Ltd.),<br>30 September, 2004 (30.09.04),<br>Claims; Par. Nos. [0028], [0035], [0038] to [0040]<br>(Family: none) | 1-4,8<br>5-7 |
| Y | JP 2000-58083 A (Nisshinbo Industries, Inc.),<br>25 February, 2000 (25.02.00),<br>Claims; Par. No. [0034]<br>& US 2002/0034672 A1<br>Claims; Par. No. [0039] | 5-7 |
| Y | JP 2002-216784 A (Araco Corp.),<br>02 August, 2002 (02.08.02),<br>Par. Nos. [0019] to [0023]<br>(Family: none) | 5-7 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>03 February, 2006 (03.02.06) | Date of mailing of the international search report<br>14 February, 2006 (14.02.06) |
|---|---|
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

| International application No. |
| --- |
| PCT/JP2005/022729 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2003-272659 A  (Hitachi, Ltd.),<br>26 September, 2003 (26.09.03),<br>Claims<br>(Family: none) | 5-7 |
| X | JP 2004-315578 A  (Nichias Corp.),<br>11 November, 2004 (11.11.04),<br>Claims; Par. Nos. [0034] to [0035]<br>(Family: none) | 8 |

Form PCT/ISA/210 (continuation of second sheet) (April 2005)

**EP 1 821 317 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002025572 A
- JP 2001236966 A
- JP 2002093431 A
- JP 2000133281 A